# EUROPEAN PATENT APPLICATION

(11) **EP 1 712 463 A1**
(43) Date of publication of application: **18.10.2006**
(21) Application number: 06007734.4
(22) Date of filing: 12.04.2006
(51) Int. Cl.: B62M 7/12, B62K 11/10, B60K 11/06, F02B 61/02

(54) **Straddle-type vehicle**

(30) Priority: 14.04.2005 JP 2005117269
(71) Applicant: YAMAHA HATSUDOKI KABUSHIKI KAISHA, Iwata-shi, Shizuoka-ken 438-8501 (JP)
(72) Inventor: Masuda, Tatsuyuki, Iwata-shi Shizuola-ken 438-8501 (JP); Takeshi, Watanabe, Iwata-shi Shizuola-ken 438-8501 (JP); Hosoi, Yukiharu, Iwata-shi Shizuola-ken 438-8501 (JP)
(74) Representative: Grünecker, Kinkeldey, Stockmair & Schwanhäusser Anwaltssozietät

(57) **Abstract**

The present invention relates to a straddle-type vehicle, in particular motorcycle, comprising an engine (40) and a generator (60) provided with separate cooling units (50,70) for individually cooling the engine (40) and the generator (60), said separate cooling units (50,70) being arranged on opposite sides of a vehicle centerline (CL).

## Description

The present invention relates to a straddle-type vehicle using an engine and a generator, and more specifically to a straddle-type vehicle capable of cooling each of the engine and the generator in an appropriate manner.

Conventionally, there has been proposed a straddle-type vehicle that employs a hybrid drive system (so-called parallel hybrid drive system) using an engine and an electric motor (wheel driving electric motor) as power sources for driving wheels.

Further, there has also been proposed a straddle-type vehicle employing a hybrid drive system (so-called series hybrid drive system) which includes an electric motor as a power source for driving wheels, a generator for charging a battery connected to the electric motor, and an engine for rotating the generator.

With regard to the straddle-type vehicle employing a hybrid drive system as described above, there has been disclosed a method of providing a "common" cooling fan for cooling the engine and the generator including the battery (generator) (see JP-A-2001-106149).

With the above-mentioned method of providing the common cooling fan, the size of the cooling fan becomes inevitably large because one cooling fan serves to cool the engine and the generator or electric motor (hereinafter, generically referred to as the generator). Accordingly, the weight of the cooling fan increases, and hence the drive loss at the time of driving the cooling fan increases.

Further, the temperature at which the thermal equilibrium state is reached differs between the engine and the electric motor. For example, while the temperature at which the thermal equilibrium state is reached is about 150°C in wall surface temperature in the case of the engine, it is about 60°C in the case of the electric motor.

Accordingly, when the engine and the electric motor are cooled by a single cooling fan, this makes it difficult to cool each of the engine and the generator in an appropriate manner.

The present invention has been made in view of the circumstances described above, and accordingly it is an object of the present invention to provide a straddle-type vehicle capable of cooling each of an engine and a generator in an appropriate manner while suppressing an increase in the weight of a cooling fan.

This objective is solved in an inventive manner by a straddle-type vehicle, in particular motorcycle, comprising an engine and a generator provided with separate cooling units for individually cooling the engine and the generator, said separate cooling units being arranged on opposite sides of a vehicle centerline.

Preferably, the straddle-type vehicle comprises, as said cooling units, a first cooling fan for cooling the engine, and a second cooling fan for cooling the generator, wherein the first cooling fan is arranged on one side with reference to the vehicle centerline extending along a longitudinal direction of the straddle-type vehicle, and wherein the second cooling fan is arranged on the other side with reference to the vehicle centerline.

Further, preferably the straddle-type vehicle further comprises a wheel driving electric motor for driving a wheel, wherein the wheel driving electric motor is placed on a side opposite to the side where the generator is arranged with reference to the vehicle centerline, and in rear of the first cooling fan.

According to a preferred embodiment, as seen in a side view of the wheel, the wheel driving electric motor is sized so as to be received within an area of the wheel.

Yet further, preferably the first cooling fan and the second cooling fan are connected to a crankshaft of the engine. Still further, preferably at least one of the first cooling fan and the second cooling fan is connected to the crankshaft via a transmission joint.

According to yet another preferred embodiment, the straddle-type vehicle further comprises a control unit for controlling the generator, a third cooling unit, in particular a third cooling fan, for cooling the control unit, and a cooling air guide passage for guiding cooling air taken in by the third cooling unit to the second cooling unit, wherein the third cooling unit is provided forward of the second cooling unit.

Further, preferably the third cooling unit, in particular the third cooling fan is arranged below a footrest board, and wherein a rotating shaft of the third cooling unit is provided upright along a vertical direction of the straddle-type vehicle. Still further, preferably the second cooling fan is detachably provided to the generator on an outer side in a vehicle width direction with respect to the generator.

Preferably, the straddle-type vehicle further comprises a housing supporting the transmission joint and fixed to a stator of the generator, and a boss engaged with the transmission joint and rotating together with the transmission joint, wherein the second cooling fan is detachably provided to the boss on an outer side in a vehicle width direction with respect to the generator.

In the following, the present invention is explained in greater detail with respect to several embodiments thereof in conjunction with the accompanying drawings, wherein:
- FIG. 1: is a left side view of a motorcycle according to an embodiment,
- FIG. 2: is a sectional view of an engine, generator unit, and electric motor unit according to the embodiment,
- FIG. 3: is a view as seen in the direction of the arrow F3 shown in FIG. 2,
- FIG. 4: is a view as seen in the direction of the arrow F4 shown in FIG. 2, and
- FIG. 5: is a partial enlarged exploded view of the generator unit according to the embodiment.

Within the Figures, reference numeral
- 10:: is a motorcycle,
- 20:: is a front wheel,
- 30:: is a cooling air guide passage,
- 33:: is a footrest board,
- 40:: is an engine,
- 41:: is a piston,
- 42:: is a connecting rod,
- 43:: is a crankshaft,
- 44:: is a transmission joint,
- 45:: is a radiator unit,
- 45a:: is a radiator main body,
- 45b:: is a radiator cover,
- 46:: is an air cleaner,
- 47:: is a muffler,
- 50:: is a generator cooling fan,
- 51:: is an outer cover,
- 52:: is a housing,
- 53:: is a boss,
- 54:: is a bearing,
- 55:: is a pin,
- 56:: is a nut,
- 57:: is a bolt,
- 58:: is a cooling fan rotating shaft,
- 60:: is a generator unit,
- 60a:: is a stator,
- 60b:: is a rotor,
- 61:: is a battery,
- 62:: is a slit portion,
- 70:: is a radiator cooling fan,
- 80:: is an electric motor unit,
- 80a:: is a stator,
- 80b:: is a rotor,
- 80c:: is an outer cover,
- 80d:: is a rotating shaft,
- 90:: is a rear wheel,
- 90:: is a rear wheel axle,
- CL:: is a vehicle centerline, and
- W:: is a cooling air,

### (Construction of a straddle-type vehicle according to this embodiment)

Next, an embodiment of a straddle-type vehicle (motorcycle) according to the present invention will be described with reference to the drawings. In the following description of the drawings, the same or similar portions are denoted by the same or similar symbols. It should be noted, however, that the drawings are intended to be schematic only and that the ratios of the respective dimensions and the like differ from the actual ones.

Therefore, the specific dimensions and the like should be determined in conjunction with the following description. Further, needless to say, the dimensional relations or ratios may partially differ between the respective drawings.

### (1) Construction of a motorcycle

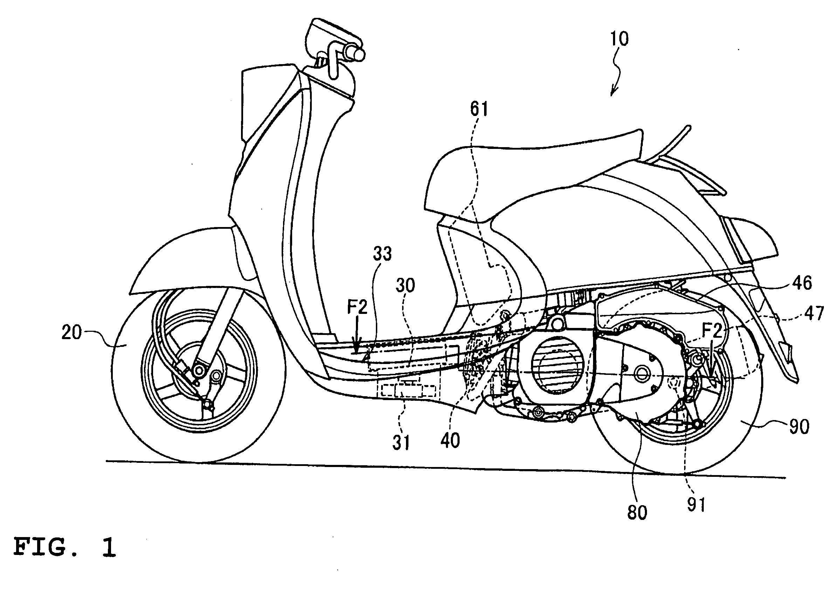

First, referring to FIG.1, the general construction of a motorcycle 10 as a straddle-type vehicle according to this embodiment will be described.

As shown in FIG.1, the motorcycle 10 is a straddle-type two-wheeled vehicle equipped with a front wheel 20 and a rear wheel 90. The motorcycle 10 is a straddle-type vehicle of a so-called hybrid drive type (specifically, series hybrid drive type), whose rear wheel 90 is rotated by means of an electric motor unit 80 (wheel driving electric motor) arranged in front of a rear wheel axle 91. As seen in the side view of the rear wheel 90, the electric motor unit 80 is sized so as to be received within the area of the rear wheel 90.

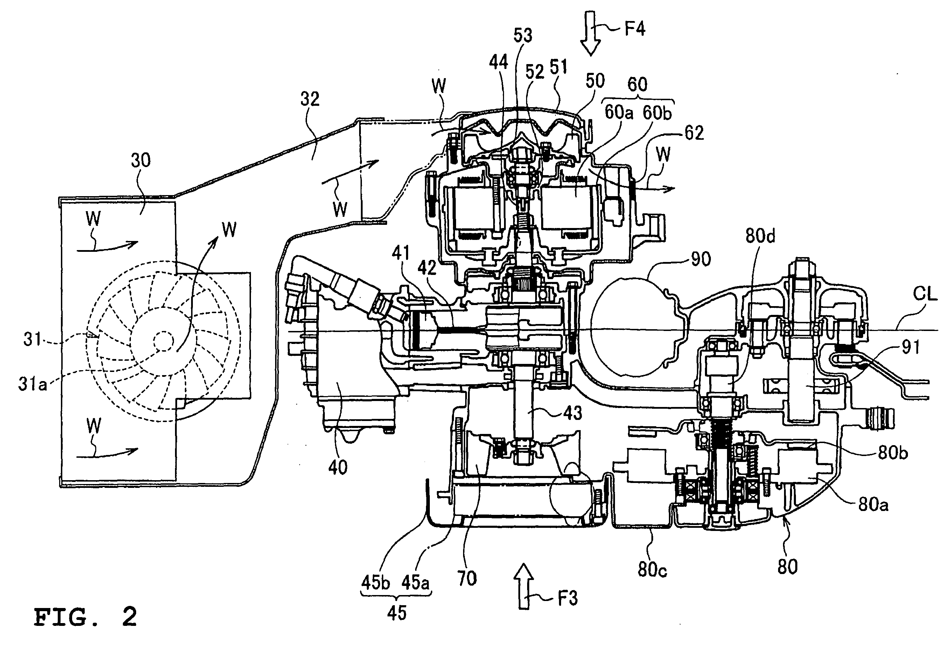

A generator unit 60 (see FIG.2) is connected to a battery 61 that stores the electric power supplied to the electric motor unit 80 and the like. The generator unit 60 (generator) is rotated by the engine 40, and stores the generated electric power into the battery 61.

Arranged in front of the engine 40 is a controller 30 (control unit) for controlling the generator unit 60 and the electric motor unit 80.

A cooling fan 31 (third cooling fan) cools the controller 30. Specifically, the cooling fan 31 is arranged below a footrest board 33. Cooling air W (see FIG.2) introduced from the external (road surface side) to the controller 30 side by the cooling fan 31 is guided in the direction of the engine 40.

Further, connected to the engine 40 are an air cleaner 46 for cleaning the air supplied to the engine 40, and a muffler 47 for reducing the exhaust noise of the engine 40.

### (2) Detailed constructions of the engine, generator unit, and electric motor unit

Next, referring to FIGs. 2 to 5, detailed constructions of the engine 40, generator unit 60, and electric motor unit 80 will be described.

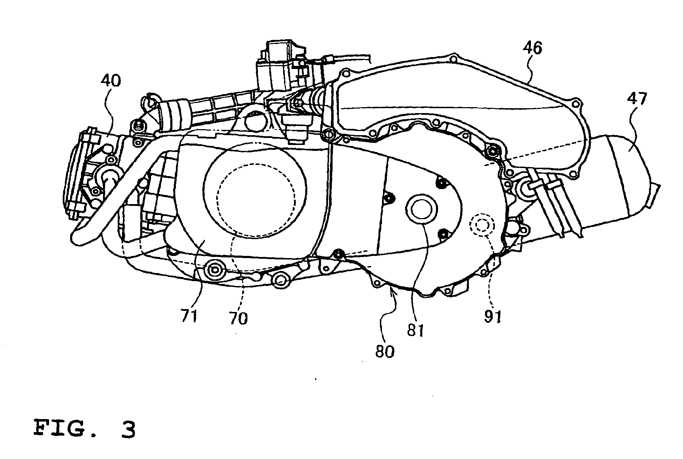

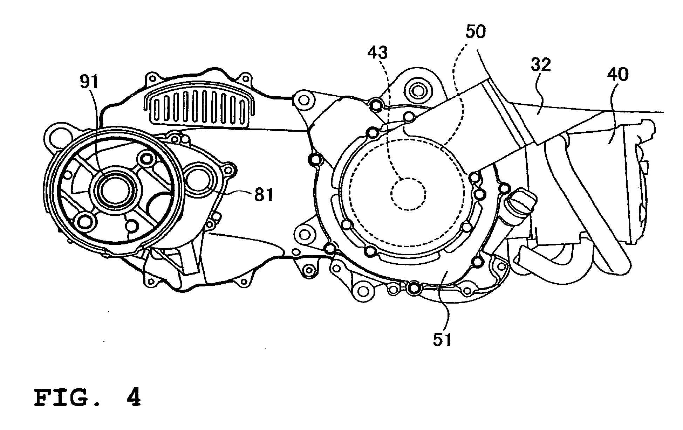

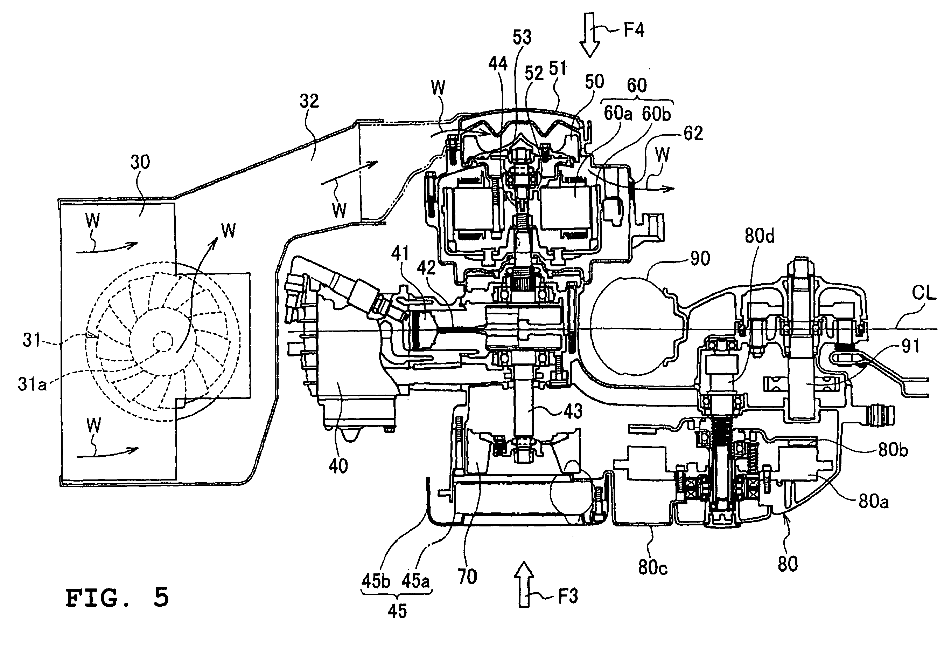

FIG.2 is a partial sectional view taken along the line F2-F2 shown in FIG.1. FIG.3 is a view as seen in the direction of the arrow F3 shown in FIG.2. Further, FIG.4 is a view as seen in the direction of the arrow F4 shown in FIG.2. FIG.5 is a partial enlarged exploded view of the generator unit 60 shown in FIG.2. It should be noted that in FIG.2, the indication of the materials (hatching) in the sectional portion is omitted.

As shown in FIG.2, the cooling fan 31 (third cooling fan) for cooling the controller 30 is arranged in front of the engine 40. Further, a rotating shaft 31 a of the cooling fan 31 is provided upright so as to extend along the vertical direction of the motorcycle 10.

The cooling air W introduced to the controller 30 side by the cooling fan 31 cools the controller 30. Further, an air introduction port (not shown) for the cooling air W is provided in front of the controller 30. The cooling air W introduced from the air introduction port is guided to a cooling air guide passage 32 together with the cooling air W introduced by the cooling fan 31.

As shown in FIGS. 2 and 4, a generator cooling fan 50 is arranged in rear of the cooling air guide passage 32. That is, the cooling air guide passage 32 serves to guide the cooling air W taken in by the cooling fan 31 to the generator cooling fan 50. The generator cooling fan 50 (second cooling fan) cools the generator unit 60.

Specifically, the cooling air guide passage 32 is communicated with the space formed by an outer cover 51 that covers the generator cooling fan 50 from the outside with respect to the vehicle width direction. The cooling air W guided to the cooling air guide passage 32 is sucked in by the generator cooling fan 50 to the generator unit 60 side, thereby cooling the generator unit 60.

Further, the cooling air W sucked to the generator unit 60 side is discharged to the outside from a slit portion 62.

The generator unit 60 (generator) has a stator 60a and a rotor 60b. As its rotor 60b is rotated by the engine 40, the generator unit 60 generates electric power to be consumed by the electric motor unit 80 and the like.

Further, in accordance with control by the controller 30, the generator unit 60 can store the generated electric power into the battery 61 (see FIG.1) or directly supply the generated electric power to the electric motor unit 80.

The engine 40 rotates the generator unit 60 (rotor 60b). Specifically, the engine 40 is a single-cylinder 4-cycle engine, which rotates a crankshaft 43 connected via a connecting rod 42 by reciprocating a piston 41.

Further, a transmission joint 44 is provided to the generator unit 60 side end portion of the crankshaft 43. The generator cooling fan 50 is connected to the crankshaft 43 via the transmission joint 44.

On the other hand, as shown in FIGS. 2 and 3, a radiator cooling fan 70 (first cooling fan) for cooling the engine 40 (radiator unit 45) is mounted to the end portion of the crankshaft 43 on the side opposite to the generator unit 60 side.

Specifically, the radiator cooling fan 70 sends cooling air to the radiator unit 45 for cooling the cooling water (LLC) used to cool the engine 40. The radiator unit 45 is constructed with a radiator main body portion 45a and a radiator cover 45b.

That is, as shown in FIG.2, the radiator cooling fan 70 (first cooling fan) is arranged on one side with reference to a vehicle centerline CL extending along the longitudinal direction of the motorcycle 10.

Further, the generator cooling fan 50 (second cooling fan) is not arranged on the side where the radiator cooling fan 70 is arranged but is arranged on the other side with reference to the vehicle centerline CL. Further, the cooling fan 31 (third cooling fan) for cooling the controller 30 is arranged forward of the generator cooling fan 50.

Further, the generator cooling fan 50 is detachably provided to the generator unit 60 on the outer side in the vehicle width direction with respect to the generator unit 60. Now, referring to FIG.5, specific description will be made on how the generator cooling fan 50 is mounted.

As shown in FIG.5, the transmission joint 44 is supported by a housing 52. The housing 52 is fixed onto the stator 60a of the generator unit 60. Further, the transmission joint 44 is in fitting engagement with a boss 53. The boss 53 is rotated together with the transmission joint 44.

That is, the generator cooling fan 50 is detachably fixed with respect to the boss 53. Specifically, a bearing 54 is inserted into a recessed portion (not shown) of the housing 52. A circlip (not shown) for regulating the movement of the bearing 54 is attached on the outer side in the vehicle width direction of the bearing 54.

Further, a pin 55 is inserted through a cooling fan rotating shaft 58. With the pin 55 being inserted through the cooling fan rotating shaft 58, the transmission joint 44, the bearing 54, the pin 55, and the cooling fan rotating shaft 58 form one assembly (ASSY).

The above assembly is fixed to the boss 53 with a nut 56. The generator cooling fan 50 is fixed to the boss 53 with a bolt 57.

Further, as shown in FIGS. 2 and 3, the electric motor unit 80 (wheel driving electric motor) for driving the rear wheel 90 is arranged diagonally in rear of the engine 40. The electric motor unit 80 has a stator 80a, a rotor 80b, an outer cover 80c, and a rotating shaft 80d.

Further, with reference to the vehicle centerline CL, the electric motor unit 80 is arranged on the side opposite to the side where the generator unit 60 is arranged, and in rear of the radiator cooling fan 70.

The rotating shaft 80d rotates the rear wheel axle 91 via a transmission gear (not shown). When the rear wheel axle 91 is rotated by the electric motor unit 80, the rear wheel 90 fixed to the rear wheel axle 91 is also rotated.

### (Operation/Effect)

According to the motorcycle 10 of this embodiment as described above, the motorcycle 10 is provided with the radiator cooling fan 70 for cooling the engine 40 (radiator unit 45) and the generator cooling fan 50 for cooling the generator unit 60. Accordingly, as compared with the case where a single "common" cooling fan is used to cool the engine 40 and the generator unit 60, the size of each cooling fan can be reduced, thereby making it possible to suppress an increase in the weight of the cooling fan.

That is, according to the motorcycle 10, an increase in the weight of the cooling fan is suppressed, whereby the drive loss at the time of driving the cooling fan can be suppressed as compared with the case where a single "common" cooling fan is used to cool the engine 40 and the generator unit 60.

Further, according to the motorcycle 10, the motorcycle 10 is provided with the radiator cooling fan 70 for cooling the engine 40 (radiator unit 45) and the generator cooling fan 50 for cooling the generator unit 60, thereby making it possible to cool each of the engine 40 (radiator unit 45) and the generator unit 60, which reach the thermal equilibrium state at different temperatures, in an appropriate manner.

Furthermore, since the radiator cooling fan 70 and the generator cooling fan 50 are separately placed on both sides of the motorcycle 10, the vehicle width of the motorcycle 10 is suppressed, whereby the banking angle of the motorcycle 10 can be easily secured.

According to the motorcycle 10, the electric motor unit 80 is sized so as to be received within the area of the rear wheel 90 as seen in the side view of the rear wheel 90, whereby the total length of the motorcycle 10 can be suppressed.

According to the motorcycle 10, the generator cooling fan 50 and the radiator cooling fan 70 are connected to the crankshaft 43 of the engine 40. Accordingly, when the crankshaft 43 rotates, the generator cooling fan 50 and the radiator cooling fan 70 also rotate.

That is, since the engine 40 (crankshaft 43) for rotating the generator unit 60 (rotor 60b) can also serve to rotate the generator cooling fan 50 and the radiator cooling fan 70, there is no need to provide an additional power source for rotating the generator cooling fan 50 and the radiator cooling fan 70.

According to the motorcycle 10, since the generator cooling fan 50 is connected to the crankshaft 43 via the transmission joint 44, the length of the crankshaft 43 can be reduced. A reduction in the length of the crankshaft 43 enables a reduction in the size and weight of the engine 40.

Further, according to the motorcycle 10, the generator cooling fan 50 is provided on the outer side in the vehicle width direction with respect to the generator unit 60, thus allowing easy replacement of the generator cooling fan 50.

Specifically, by removing the outer cover 51, the generator cooling fan 50 can be easily replaced without removing the generator unit 60.

According to the motorcycle 10, the cooling fan 31 is provided in front of the generator cooling fan 50. Further, the motorcycle 10 is provided with the cooling air guide passage 32 for guiding the cooling air W, which is introduced to the controller 30 side by the cooling fan 31, toward the generator cooling fan 50.

Accordingly, a larger amount of cooling air W can be guided to the generator cooling fan 50 while cooling the controller 30. That is, according to the motorcycle 10, the generator unit 60 can be cooled with enhanced efficiency.

According to the motorcycle 10, the cooling fan 31 is arranged below the footrest board 33, and the rotating shaft 31 a of the cooling fan 31 is provided upright along the vertical direction of the motorcycle 10. Accordingly, the cooling fan 31 can be arranged below the footrest board 33 without raising the position of the footrest board 33.

### (Other Embodiments)

While the teaching of the present invention has been described in the foregoing by way of an embodiment thereof, the description and drawings constituting a part of this disclosure should not be construed as limiting the invention. From the foregoing disclosure, various alternative embodiments of the present invention will be readily apparent to those skilled in the art.

For example, while in the above-described embodiment the cooling fan 31 is provided in front of the generator cooling fan 50, the motorcycle 10 may not necessarily be provided with the cooling fan 31.

While in the above-described embodiment the generator cooling fan 50 is provided on the outer side in the vehicle width direction with respect to the generator unit 60, and the generator cooling fan 50 is detachably provided, this should not be construed restrictively. The generator cooling fan 50 may not necessarily be provided on the outer side in the vehicle width direction with respect to the generator unit 60.

Further, the generator cooling fan 50 (generator unit 60) may be connected to the crankshaft 43 without using the transmission joint 44. Also, instead of the generator cooling fan 50, the radiator cooling fan 70 may be connected to the crankshaft 43 via the transmission joint 44. Alternatively, each of the generator cooling fan 50 and radiator cooling fan 70 may be connected to the crankshaft 43 via a transmission joint.

Further, the generator cooling fan 50 and the radiator cooling fan 70 may not necessarily be connected to the crankshaft 43. In this case, the generator cooling fan 50 and the radiator cooling fan 70 may be rotated by using a power source such as an electric motor.

Further, while in the above-described embodiment the description is directed to the example of the motorcycle 10 employing the series hybrid drive system, this should not be construed restrictively. The present teaching may also be applied to a motorcycle employing the parallel hybrid system which is equipped with an engine and an electric motor as the power sources for driving the wheels. Further, the present teaching is applicable not only to a motorcycle employing the hybrid drive system but also to a motorcycle using only an engine as a power source as far as it is mounted with a generator.

Further, while in the above-described embodiment the motorcycle 10 is described as an example, the present teaching may also be applied to other types of straddle-type vehicle (for example, a straddle-type vehicle having three or four wheels).

It is to be understood as a matter of course that the present invention includes various other embodiments not described herein.

The description above discloses (amongst others) in order to solve the above-mentioned problems, an embodiment of a straddle-type vehicle including: a first cooling fan (radiator cooling fan 70) for cooling an engine (engine 40); and a second cooling fan (generator cooling fan 50) for cooling a generator (generator unit 60), in which the first cooling fan is arranged on one side with reference to a vehicle centerline (vehicle centerline CL) extending along a longitudinal direction of the straddle-type vehicle, and wherein the second cooling fan is arranged on the other side with reference to the vehicle centerline.

According to the above-mentioned feature, the first cooling fan for cooling the engine, and the second cooling fan for cooling the generator are provided. Accordingly, as compared with the case where a single "common" cooling fan is used to cool the engine and the generator unit, the size of each cooling fan can be reduced, thereby making it possible to suppress an increase in the weight of the cooling fan.

That is, according to the above-mentioned feature, an increase in the weight of the cooling fan is suppressed, whereby the drive loss at the time of driving the cooling fan can be suppressed as compared with the case where a single "common" cooling fan is used to cool the engine and the generator.

Further, according to the above-mentioned feature, the first cooling fan for cooling the engine, and the second cooling fan for cooling the generator are provided. Accordingly, each of the engine and generator, which reach the thermal equilibrium state at different temperatures, can be cooled in an appropriate manner.

Furthermore, since the first cooling fan for cooling the engine and the second cooling fan for cooling the generator are separately placed on both sides of the straddle-type vehicle, the vehicle width of the straddle-type vehicle is suppressed, whereby the banking angle of the straddle-type vehicle can be easily secured.

According to a second embodiment, the straddle-type vehicle further includes a wheel driving electric motor (electric motor unit 80) for driving a wheel (rear wheel 90), in which the wheel driving electric motor is placed on a side opposite to the side where the generator is arranged with reference to the vehicle centerline, and in rear of the first cooling fan.

According to a third embodiment, as seen in a side view of the wheel, the wheel driving electric motor is sized so as to be received within an area of the wheel.

According to a fourth embodiment, the first cooling fan and the second cooling fan are connected to a crankshaft (crankshaft 43) of the engine.

According to a fifth embodiment, at least one of the first cooling fan and the second cooling fan is connected to the crankshaft via a transmission joint (transmission joint 44).

According to a sixth embodiment, the straddle-type vehicle further includes: a control unit (controller 30) for controlling the generator; a third cooling fan (cooling fan 31) for cooling the control unit; and a cooling air guide passage (cooling air guide passage 32) for guiding cooling air (cooling air W) taken in by the third cooling fan to the second cooling fan, in which the third cooling fan is provided forward of the second cooling fan.

According to a seventh embodiment, the third cooling fan is arranged below a footrest board (footrest board 33), and a rotating shaft (rotating shaft 31 a) of the third cooling fan is provided upright along a vertical direction of the straddle-type vehicle.

According to an eighth embodiment, the second cooling fan is detachably provided to the generator on an outer side in a vehicle width direction with respect to the generator.

According to a ninth embodiment, the straddle-type vehicle further includes: a housing (housing 52) supporting the transmission joint and fixed to a stator of the generator; and a boss (boss 33) brought into fitting engagement with the transmission joint and rotating together with the transmission joint, in which the second cooling fan is detachably provided to the boss on an outer side in a vehicle width direction with respect to the generator.

According to the features of the present embodiments, it is possible to provide a straddle-type vehicle capable of cooling each of an engine and a generator in an appropriate manner while suppressing an increase in the weight of the cooling fan.

Thus, the present description discloses as a particularly preferred embodiment, in order to provide a straddle-type vehicle capable of cooling each of an engine and a generator in an appropriate manner while suppressing an increase in the weight of a cooling fan, a motorcycle 10 employing a hybrid drive system according to the present invention includes a radiator cooling fan 70 for cooling an engine 40 (radiator unit 45), and a generator cooling fan 50 for cooling a generator. The radiator cooling fan 70 is arranged on one side with reference to a vehicle centerline CL extending along the longitudinal direction of the motorcycle 10, and the generator cooling fan 50 is arranged on the other side with reference to the vehicle centerline CL.

## Claims

1. Straddle-type vehicle, in particular motorcycle, comprising an engine (40) and a generator (60) provided with separate cooling units (50,70) for individually cooling the engine (40) and the generator (60), said separate cooling units (50,70) being arranged on opposite sides of a vehicle centerline (CL).

2. Straddle-type vehicle according to claim 1, comprising as said cooling units a first cooling fan (70) for cooling the engine (40), and a second cooling fan (50) for cooling the generator (60), wherein the first cooling fan (70) is arranged on one side with reference to the vehicle centerline (CL) extending along a longitudinal direction of the straddle-type vehicle, and wherein the second cooling fan (50) is arranged on the other side with reference to the vehicle centerline (CL).

3. Straddle type vehicle according to claim 1 or 2, further comprising a wheel driving electric motor (80) for driving a wheel (90), wherein the wheel driving electric motor (80) is placed on a side opposite to the side where the generator (60) is arranged with reference to the vehicle centerline (CL), and in rear of the first cooling fan (70).

4. Straddle-type vehicle according to claim 3, wherein as seen in a side view of the wheel (90), the wheel driving electric motor (80) is sized so as to be received within an area of the wheel (90).

5. Straddle-type vehicle according to one of the claims 2 to 4, wherein the first cooling fan (70) and the second cooling fan (50) are connected to a crankshaft (43) of the engine (40).

6. Straddle-type vehicle according to claim 5, wherein at least one of the first cooling fan (70) and the second cooling fan (50) is connected to the crankshaft (43) via a transmission joint (44).

7. Straddle-type vehicle according to one of the claims 1 to 6, further comprising: a control unit (30) for controlling the generator (50), a third cooling unit, in particular a third cooling fan (31), for cooling the control unit (30), and a cooling air guide passage (32) for guiding cooling air taken in by the third cooling unit (31) to the second cooling unit (50), wherein the third cooling unit (31) is provided forward of the second cooling unit (50)

8. Straddle-type vehicle according to claim 7, wherein the third cooling unit, in particular the third cooling fan (31) is arranged below a footrest board, and wherein a rotating shaft (31a) of the third cooling unit (31) is provided upright along a vertical direction of the straddle-type vehicle.

9. Straddle-type vehicle according to one of the claims 5 to 8, wherein the second cooling fan (50) is detachably provided to the generator (60) on an outer side in a vehicle width direction with respect to the generator (60).

10. Straddle-type vehicle according to one of the claims 6 to 9, further comprising: a housing (52) supporting the transmission joint (44) and fixed to a stator of the generator (60), and a boss (53) engaged with the transmission joint (44) and rotating together with the transmission joint (44), wherein the second cooling fan (50) is detachably provided to the boss (53) on an outer side in a vehicle width direction with respect to the generator (60).
